# EUROPEAN PATENT APPLICATION

(11) **EP 4 847 460 A1**
(43) Date of publication of application: **02.12.2026**
(21) Application number: 25179866.6
(22) Date of filing: 30.05.2025
(51) Int. Cl.: C03B 37/027

(54) **PRESSURE INTERFACE FOR OPTICAL FIBER CANE**

(71) Applicant: Microsoft Technology Licensing, LLC, Redmond, WA 98052 (US); University Of Southampton, Southampton, Hampshire SO17 1BJ (GB)
(72) Inventor: APPLEYARD, Andrew Paul, Redmond, 98052-6399 (US); DORAN, Stephen Paul, Redmond, 98052-6399 (US); HARKER, Andrew Thomas, Redmond, 98052-6399 (US); SANDOGHCHI, Seyed Reza, Redmond, 98052-6399 (US); STROUD, John Robert, Redmond, 98052-6399 (US); HOOPER, Lucy Ellen, Redmond, 98052-6399 (US); MULCASTER, Jonathan James, Redmond, 98052-6399 (US); PETROVICH, Marco, Redmond, 98052-6399 (US); DANCER, Colin Michael Tregenza, Salisbury (GB); AMOUZAD MAHDIRAJI, Ghafour, Southampton, SO17 1BJ (GB); JASION, Gregory Teofil, Southampton, SO17 1BJ (GB); POLETTI, Francesco, Southampton, SO17 1BJ (GB)
(74) Representative: CMS Cameron McKenna Nabarro Olswang LLP

(57) **Abstract**

A pressure interface for providing pressure to hollow portions of an optical fiber cane and a method of manufacturing the pressure interface. The pressure interface comprising a pressure manifold 560 having a plurality of channels 561, 564 therethrough, each of the plurality of channels being at least partially aligned with at least one hole of a membrane disk 550; and the membrane disk having a plurality of holes therethrough, the membrane disk having a flat surface abutting a flat surface of the pressure manifold.

## Description

### SUMMARY

The following presents a simplified summary of the disclosure to provide a basic understanding to the reader. This summary is not intended to identify key features or essential features of the claimed subject matter nor is it intended to be used to limit the scope of the claimed subject matter. Its sole purpose is to present a selection of concepts disclosed herein in a simplified form as a prelude to the more detailed description that is presented later.

A first aspect is a pressure interface for providing pressure to hollow portions of an optical fiber cane. The pressure interface comprising a pressure manifold having a plurality of channels therethrough. Each of the plurality of channels being at least partially aligned with at least one hole of a membrane disk. The membrane disk having a plurality of holes therethrough, and a flat surface abutting a flat surface of the pressure manifold.

A second aspect is a method of manufacturing a pressure interface for an optical fiber cane, the cane having a plurality of hollow structures extending axially along the cane, the hollow structures defining a plurality of hollow portions of the cane. The method comprising imaging an end face of the cane; determining in the image a plurality of locations at the cane end face, each location of the plurality of locations corresponding to a hollow portion of the cane; making a plurality of holes in a membrane disk, each of the holes corresponding to a location of the determined plurality of locations; and abutting the membrane disk with a pressure manifold, the pressure manifold having a plurality of channels therethrough, each of the plurality of channels being at least partially aligned with a hole of the plurality of holes of the membrane disk.

The disclosed methods have many advantages. A pressure interface for a cane may be manufactured simply and used therefore there is a great variety in possible configurations of an interface structure that may be produced. The method and apparatus disclosed herein offer flexibility in terms of cane internal structures that the methods may be applied to in order to pressurize hollow structures within optical fiber cane. The methods may be automated to increase cane drawing speed. Furthermore, by accurate pressurization of capillaries and any other hollow cane structures, there is an increase in yield of high-quality optical fibers that reduce wastage. A direct access to each capillary using the extensions of an interface allows complex pressurization requirements of structures during drawing (i.e., allowing for different amounts of pressure to be applied to the internal capillaries as required, such as, for example, an innermost nested capillary being supplied by the highest pressure).

Many of the attendant features will be more readily appreciated as the same becomes better understood by reference to the following detailed description considered in connection with the accompanying drawings.

### BRIEF DESCRIPTION OF THE DRAWINGS

The present description will be better understood from the following detailed description read in light of the accompanying drawings, wherein:
FIGs. 1-3 illustrate transverse cross-sectional views of three different examples of antiresonant hollow core fibers.
FIG. 4 illustrates an example cane face.
FIG. 5 illustrates steps for manufacturing a cane pressure interface.
FIG. 6A illustrates a section of cane.
FIG. 6B illustrates an exploded view of a cross-section of a cane pressure interface.
FIG. 6C illustrates a cross-section of a cane pressure interface.
FIG. 7 illustrates a cross-section of an angular membrane disk hole.
FIG. 8 illustrates a flowchart for a method for manufacturing a cane pressure interface.
FIG. 9 illustrates a computing-based device.
Reference numerals are used throughout the description to designate parts in the accompanying drawings.

### DETAILED DESCRIPTION

The detailed description provided below in connection with the appended drawings is intended as a description of the present examples and is not intended to represent the only forms in which the present examples are constructed or utilized. The description sets forth the functions of the examples and the sequence of operations for constructing and operating the examples. However, the same or equivalent functions and sequences may be accomplished by different examples.

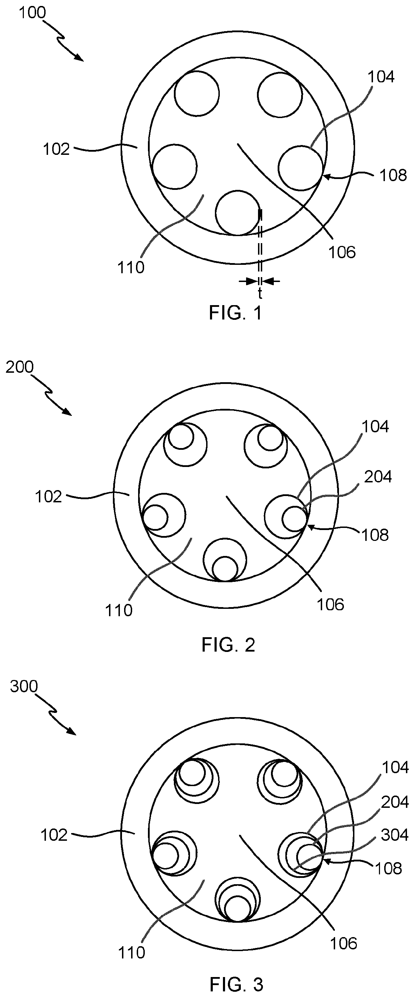

FIGs. 1-3 show transverse cross-sectional views of three different examples of antiresonant hollow core fibers (ARFs). The illustrated fibers each show their respective inner capillary structures. Light is guided in these fibers by an antiresonant optical effect. Each of the fibers 100, 200, 300 comprises a tubular outer cladding (or jacket) 102, a structured, inner, cladding comprising a plurality of tubular cladding capillaries 104, 204, 304 and a hollow core 106. The outer cladding 102 has a glass thickness that is typically much larger than that of the cladding capillaries 104, 204, 304. In the first example, shown in FIG. 1, the structured, inner, cladding comprises five capillaries 104 of the same cross-sectional size and shape, which are arranged inside the outer cladding 102 in a single ring so that the longitudinal axes of each cladding capillary 104 and of the outer cladding 102 are substantially parallel. Each cladding capillary 104 is in contact with (e.g. bonded to) the inner surface of the outer cladding 102 at an azimuthal location 108, such that the cladding capillaries 104 are evenly spaced around the inner circumference of the outer cladding 102 and are also spaced apart from each other by gaps 110 (i.e. such that there is no contact between neighboring capillaries). In some designs of ARF, the cladding capillaries 104 may be positioned in contact with each other (in other words, not spaced apart as in FIG. 1), but spacing to eliminate this contact can improve the fiber's optical performance. The gaps 110 remove nodes that arise at the contact points between adjacent tubes, and which tend to cause undesirable resonances that result in high losses. Accordingly, fibers with spaced-apart cladding capillaries may be referred to as "nodeless antiresonant hollow core fibers".

The arrangement of the cladding capillaries 104 in a ring around the inside of the tubular outer cladding 102 creates a central space, cavity, or void within the fiber, also with its longitudinal axis parallel to those of the outer cladding 102 and the cladding capillaries 104, which is the fiber's hollow core 106. The hollow core 106 is bounded by the inwardly facing parts of the outer surfaces of the cladding capillaries 104. This is the core boundary, and the material (glass or polymer, for example) of the capillary walls that make up this boundary provides the required antiresonance optical guidance effect or mechanism. The cladding capillaries 104 have a thickness, t, at the core boundary which defines the wavelength for which antiresonant optical guiding occurs in the ARF.

In the second example, shown in FIG. 2, each primary cladding capillary 104 has a secondary, smaller capillary 204 nested inside it, bonded to the inner surface of the primary cladding capillary 104, in this example at the same azimuthal location 108 as the point of bonding between the primary cladding capillary 104 and the outer cladding 102. These additional smaller capillaries 204 can reduce the optical loss. ARF designs of this type, with secondary capillaries, may be referred to as "nested antiresonant nodeless fibers" (NANFs) (TM).

The third example, shown in FIG. 3, has two smaller cladding capillaries 204, 304 nested inside each cladding capillary 104. As with the example shown in FIG. 2, each of the smaller capillaries 204, 304 is bonded to the inner surface of the immediately larger capillary at the same azimuthal location as the point of bonding between the primary cladding capillary 104 and the outer cladding 102. In this example, the smaller capillary 304 may be referred to as the secondary cladding capillary and the smallest capillary 204 may be referred to as the tertiary cladding capillary. The tertiary cladding capillary 204 is bonded to the inner surface of the secondary cladding capillary 304 and the secondary cladding capillary 304 is bonded to the inner surface of the primary cladding capillary 104. ARF designs of this type, with secondary and tertiary cladding capillaries may be referred to as "double-nested antiresonant nodeless fibers" (DNANFs). In yet further examples (not shown in the drawings) there may be a different configuration of cladding capillaries and/or a different number of nested resonators. For example, there may be smaller further capillaries, within the tertiary capillary 204 to provide further levels of nesting and/or there may be a plurality of secondary cladding capillaries within each primary cladding capillary, each secondary cladding capillary being bonded to the inner surface of the primary cladding capillary at a different azimuthal location and/or each primary cladding capillary may have an internal structure (e.g. one or more dividing walls).

A technique for manufacturing such ARFs (referred to herein as 'optical fibers' or simply 'fibers'), including the nested and double-nested variants, is to use a preform. Preforms can be drawn into canes which can in turn be drawn into an optical fiber. In other words, the preform is a typically glass element that is used as basis for creating optical fiber. Preforms have matching internal structures to the resulting hollow core optical fiber but are larger scale (e.g. the diameter of a preform is on the scale of at least a few centimeters, while diameters of optical fibers may be on the micrometer scale). Cane preforms are typically manufactured by fusing together a plurality of glass tubes. This involves positioning the tubes that will form the structured inner cladding inside a tube that will form the tubular outer cladding and then applying heat along the outside of the tubular outer cladding at the point where the tubes are to be fused together. This involves multiple operations, e.g. to fuse each set of nested capillaries to the inner surface of the tubular outer cladding.

The preform is connected to a drawing system (e.g. a fiber drawing tower) and then heated and pulled slowly, which causes a narrowing and stretching effect on the part of the preform that is being pulled. The internal structure with regard to the internal capillaries is theoretically maintained after the drawing process. In various examples, the drawn preform is cut off the preform after it has been drawn in a drawing system, which produces separated canes. The drawing process may be repeated on the canes to produce fibers with the fiber structure varying dependent upon aspects occurring during the drawing process, such as, but not limited to, surface tension of the drawn material, heating variations, etc.

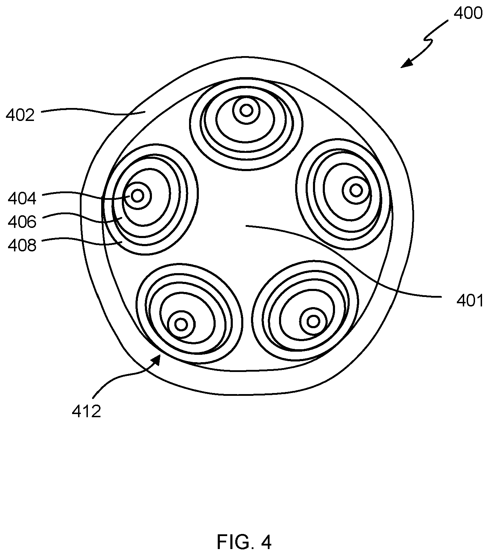

FIG. 4 shows an example of a cane face 400. The glass cladding 402, and internal nested capillaries (inner 404, middle 406 and outer 408) are shown, as well as the core 401.

As a preform is heated and drawn, effects such as surface tension and the pressure differences within the capillaries themselves lead to a deformation of the internal structure in the resultant cane or fiber, as the pressure differences act to close the fiber or cane. The deformation is visible from the end face 400. A consequence of this is that the outer 408 and middle 406 capillaries in the internal nesting structure may have an oval shape, as shown in FIG. 4. There is also the risk of deformation of the overall glass cladding 402, which houses the internal capillaries 404, 406, 408. To produce an optical fiber, the cane must be drawn and further deformation may occur. A deformed optical fiber is of lower quality, with a potential loss of resonance due to the new shape, which affects the light that will eventually travel down the resulting fibers. There is therefore a desire to pressurize a cane to ensure that there is no loss of shape/structure during drawing of the optical fiber. As a result of different levels of deformation and their sizes, the core 401 and each of the internal capillaries 404, 406, 408 of the cane 400 will ideally require differing amounts of pressurization to prevent collapse of the structure, which may be referred to as a failed draw.

Current methods of pressurization are techniques such as inflation, which is filling a cane with a fluid, such as a gas, to expand the capillaries and core of the cane during the drawing process to produce an optical fiber. This is performed using gas conduits that are placed directly into the capillaries. Common gases to use are inert gases, such as (but not limited to) argon. Owing to the cylindrical shape of a typical preform, cane or fiber, the gas used to pressurize enters at one end face of the cylinder. However, problems exist with these methods. Due to the varying sizes of the internal capillaries within the preforms (inner, middle and outer nesting), there is not a constant pressure across the face of the cane, meaning a constant amount of gas for the capillaries is not sufficient to correct the deformation properly. The innermost capillary will need more pressurization than the middle-nested capillary, which will in turn need more pressurization than the outer nested capillary. All nested capillaries will need more pressurization than the overall glass cladding. There is a great difficulty with being able to correctly apply the right amount of pressure within the individual capillaries and across the face of a cane, owing to the small sizes of the cane, meaning it is difficult to pressurize the individual capillaries. Furthermore, because of the small size of a cane, a size of a gas conduit inserted into the cane will be small (on a micrometer scale), so it is incredibly difficult and time-consuming to insert gas conduits into a cane in order to draw an optical fiber. In some examples, an approximate range of 5 to 20 kPa is provided to capillaries of a cane with an innermost capillary having a higher pressure than surrounding capillaries. An exemplary core pressure may be approximately 10kPa. While FIG. 4 shows an example cane with inner, middle and outer nested capillaries preform, it should be noted that this is an illustrative example. It is also possible to pressurize canes with less or more nesting, or where capillaries are not nested.

Hence, disclosed herein is a pressure interface for providing pressure to hollow portions of an optical fiber cane and method of manufacturing a pressure interface for an optical fiber cane. An improved pressure interface results in an improvement in quality of a drawn optical fiber. Features and advantages will be described in more detail herein.

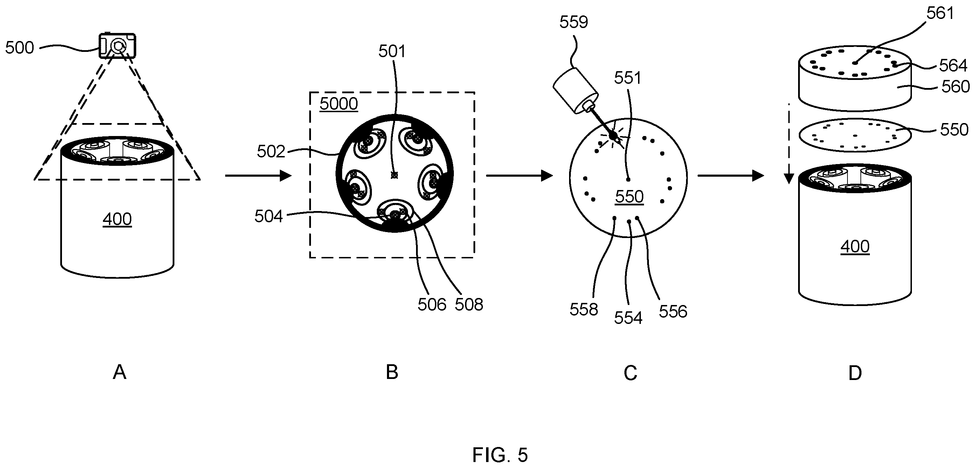

FIG. 5 illustrates steps (A-D) for manufacturing a cane pressure interface.

At step A, a section of cane 400 is provided and an end face of the cane is imaged. Using an imaging device 500, such as a still camera or a video camera. Glass cladding and internal structures of the cane 400 are visible at the cane end face. The internal structures may include capillaries extending axially along the cane. The internal structures may include hollow structures and non-hollow structures. Optionally, orientation or location information may be provided on the section of cane 400, for example on the cane end face, or on a mechanical fixing to the cane 400, such on a bush or collar fastened or coupled to the cane 400. The orientation or location information may be a datum point. Prior to step A, the cane 400 may have been rotated about a central axis to be in a specific alignment.

The cane end face image is processed to identify locations at the cane end face suitable for pressurization of a hollow part of the cane 400. Hollow sections of the cane 501, 504, 506, 508, visible in the cane end face image 506, are associated with pressurization locations 501.

The processing of the image may be performed by a human or may be automated. Methods of automation may be performed at least partially by a machine vision algorithm. This may be a non-machine learned model that detects geometric shapes in the image before providing a pressurization point in one or more of the detected shapes or in detected shapes of a predetermined size or category. Alternatively, a machine learned model, trained on labelled images, may be used to provide pressurization locations.

At step B, a cane end face map 5000 is provided that identifies pressurization locations 501, represented by a plurality of crosshairs in the exemplary cane end face map 5000. Optionally, the end face map 5000 may be manually adjusted by a user to adjust one or more pressurization locations, add one or more pressurization locations or remove one or more pressurization locations.

At step C, a membrane 550 is provided with holes 551, 554, 556, 558 aligned to the pressurization locations 501 of the end face map 5000. The membrane 550 may be, for example, a flat disk of silicone, PTFE, or layers of silicone and PTFE. The thickness of the membrane 550 may be, for example, between 1 mm and 5 mm. The holes may be provided with the membrane 550 in situ, i.e. abutting or fastened to the cane 400, or the membrane with holes may be later aligned with the cane 40, in which case the membrane is aligned with orientation or location information provided on the cane 400. The holes in the membrane 550 may be provided, for example, by laser cutting by a laser 559, drilling, cutting or etching. Holes in the membrane 551, 554, 556, 558 align with hollow parts 501, 504, 506, 508 of the cane 400. The hole diameters may be, for example, between 50 µm and 500 µm, and between 100 µm and 150 µm.

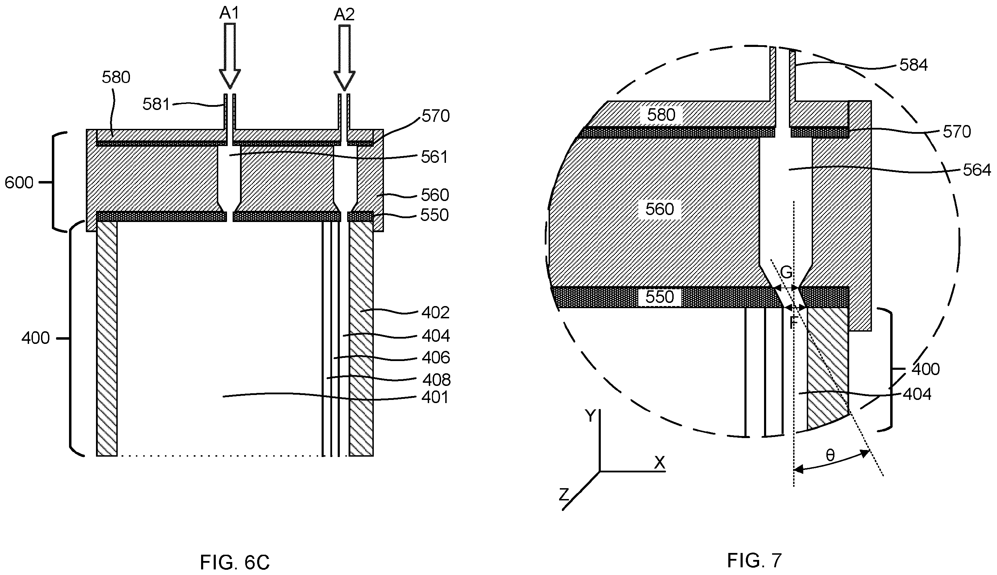

In some examples, the holes are made at a non-perpendicular angle to a membrane surface. This is discussed below in reference to FIG. 7.

At step D, a pressure manifold 560 is provided. The pressure manifold has channels 561, 564 that at least partially overlap one or more holes 551, 554 in the membrane 550 when the pressure manifold is aligned. Pressure manifold 560 at step D of Fig. 5 includes additional channels that are unlabeled. The unlabeled channels are aligned with membrane holes 556, 558. The channels may be larger in diameter than the holes, and may be either parallel with respect to each other or one or more channels may be non-parallel, which may be used to separate the channel entrances (distal to the membrane and cane 400) enabling easier access thereto. The cane 400, membrane 550 and pressure manifold 560 are brought together so that the channel entrances are in fluid communication with hollow parts of the cane enabling pressurization thereof.

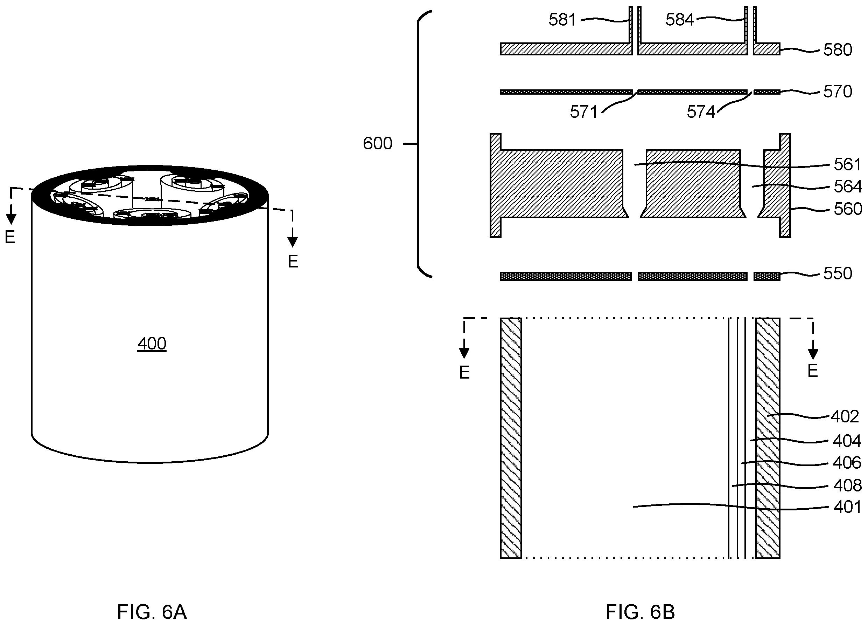

FIG. 6A illustrates a section of cane 400 with a cross-section indicated by dashed line E. The cross-section E bisects the glass cladding twice, the hollow core and three nested capillaries. The pressurization locations of the end face map are superimposed on the end of the cane 400 for illustrative purposes. The cross-section E bisects pressurization locations of a hollow core of the cane and an innermost capillary.

FIG. 6B illustrates an exploded view of a cross-section of an example of a cane pressure interface 600 and a cross-section of the cane 400 of FIG.6A. In this example, the cane pressure interface 600 comprises a membrane 550, a pressure manifold 560, a gasket 570 and a connection manifold 580. The cross-section of the cane 400 illustrates a glass cladding 402, a hollow section of an innermost nested capillary 404, a hollow section of an intermediate nested capillary 406, a hollow section of an outer nested capillary 408, and a hollow core 401 of the cane. As discussed in relation to FIG. 6A, the cross-section E bisects pressurization locations of a hollow core of the cane and an innermost capillary.

The membrane 550, in cross-section, has holes corresponding to the pressurization locations of the hollow core of the cane 401 and the hollow of the innermost capillary 404.

The pressure manifold 560, in cross-section, is illustrated with upper and lower collar sections that at least partially enclose other components as illustrated in FIG. 6C. The pressure manifold 560 has two channels 561, 564 illustrated that are at least partially aligned with a respective hole in the membrane 550. The two channels are a core channel 561 and an innermost capillary channel 564. The channels reduce in diameter from the top to the bottom where they engage with holes in the membrane 550. The channel diameters at the bottom are greater than the membrane hole diameters to provide greater compliance when fitted thereto. This enables membrane 550 to seal against structures in the core that define the hollow portions of the core thereby providing matching between the fixed hole pattern of the pressure manifold 560 and the variable structure of the cane end. The membrane 550 therefore can be reused for fitting to multiple canes to pressurize hollow sections in canes when drawing optical fiber from the canes.

The gasket 570, in cross-section, has holes therein aligned to engage with each hole in the pressure manifold. The gasket may be formed from same or similar material to the membrane 550. The holes in the gasket are not required to be matched to a specific cane.

The connection manifold 580, in cross-section, has two connections 581, 582 for receiving pressurized gas/fluid. The connections are at least partially aligned with respective holes of the gasket 570. In FIG. 6B, a connection manifold core connection 581 is in fluid communication with the hollow core 401 of the cane, and the innermost capillary channel 584 is in fluid communication with the hollow innermost capillary 404 of the cane. Each connection of the connection manifold is in fluid communication with a hollow section of the cane. In some examples, not illustrated, a single connection of the connection manifold may be in fluid communication with a plurality of hollow section of a cane.

**In** the example illustrated in FIG. 6B, the pressure manifold 560 and the connection manifold 580 are separate components, however they may be integrated into a single component meaning that a gasket 570 is not required.

FIG. 6C illustrates a cross-section of the cane pressure interface 600 of FIG. 6B. Two arrows A1 and A2 represent a flow of gas/fluid that may be used to pressurize the hollow core 401 of a cane 400 and the hollow 404 of an innermost nested capillary. A plurality of hollow sections of a cane, and possibly all hollow sections of a cane may be pressurized using the cane interface. As it will be appreciated, in the figures only a short section of a cane is illustrated rather than a full-length cane.

Not illustrated in the figures is a clamping means operable to hold the components of the cane pressure interface together, which may also hold an outer cane surface.

A leak test may be provided by either positively or negatively pressurizing the cane hollow sections and monitoring pressures therein to detect a pressure change indicating a leak requiring further diagnosis and remedial work to the cane pressure interface 600. A distal end of the cane may be sealed for this purpose.

During a draw, a cane may be pressurized using the cane pressure interface 600 and a proportion of the cane length will be drawn into optical fiber. The membrane 550, custom to the particular cane, may be disposed of however the remainder of the cane pressure interface 600 is reusable for future draws using additional canes.

FIG. 7 illustrates an example of a cross-section of an angled membrane disk hole, i.e. the hole is at a non-perpendicular angle to a membrane surface. A hole in a membrane disk extends between a cane side that is proximal to an end of a cane 400 to a connection manifold side proximal to the connection manifold 560. Locations and areas of channel ends of connection manifold channels are known and are fixed because the connection manifold is reusable. Each location and area of each channel end is a target site for a hole. In contrast, because a cane structure may vary due to considerations including the drawing process the cane underwent when being drawn from an optical fiber preform, the shape and locations of the hollow parts of a cane end will vary and are determined by an imaging step. This means that while a particular hollow part of a cane end may align with a target site and a perpendicular hole may be used, in some circumstances there may not be sufficient alignment with a target site and, in this case, a non-perpendicular hole may be used. Such a case is illustrated in FIG. 7 where a hole of angle θ is used as the target site G is insufficiently aligned with the end F of the innermost capillary 404 and a perpendicular hole would not engage with the target site G. To maximize the flow of gas/fluid through the hole, the non-perpendicular hole is used. In this illustrated 2D example, only angle θ is required to represent the non-perpendicular hole direction; however, in real word 3D scenarios there is also a second angle to a hole, i.e. into or out of the figure. In such cases, an end face map includes hole location, and X and Z axis values and, optionally if non-perpendicular holes are required, θ and ϕ hole angle values. An end face map may be stored as an electronic file with locations and X and Z axis values for each hole to be made in a membrane disk. Perpendicular holes would have X and Z axis values of zero.

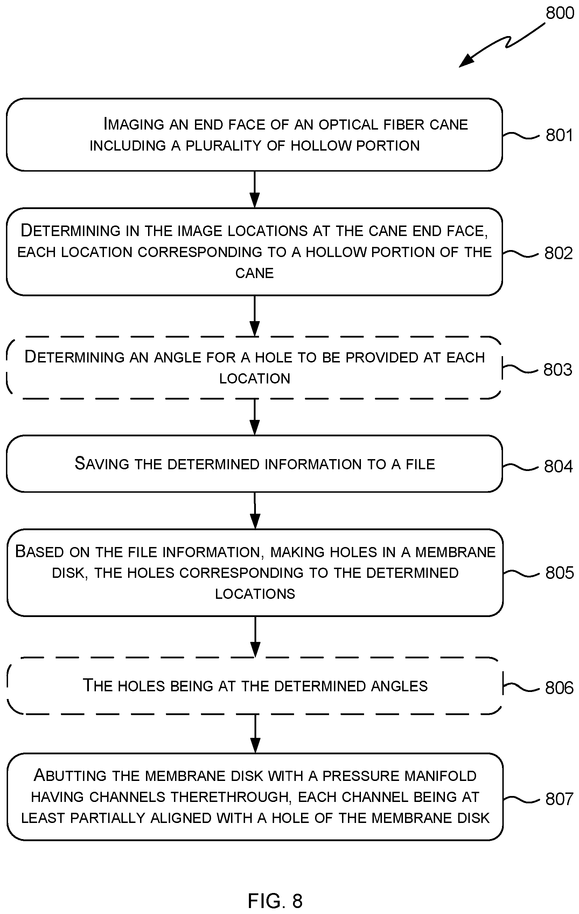

FIG. 8 illustrates an exemplary flowchart of a method 800 for manufacturing a cane pressure interface.

At block 801, imaging an end face of an optical fiber cane including a plurality of hollow portions of the cane. The imaging being by a camera or other suitable device.

At block 802, determining, in the image, locations at the cane end face, each determined location corresponding to a hollow portion of the cane. This may be performed by a human or it may be automated by software.

At block 803, optionally, determining an angle for a hole to be provided at each location. Using a hole that is non-perpendicular to the cane end face enables greater compliance when matching the determined hollow portions of the cane to other structures in the cane pressure interface.

At block 804, saving the determined information to a file.

At block 805, based on the file information, making holes in a membrane disk, the holes corresponding to the determined locations. Optionally, per block 806, the holes being at the determined angles.

At block 807, abutting the membrane disk with a pressure manifold having channels therethrough, each channel being at least partially aligned with a hole of the membrane disk. The channels of the pressure manifold being operable to receive pressurized fluid/gas and transmit the pressure through aligned holes to aligned hollow sections of the optical fiber cane for use when drawing optical fiber from the cane.

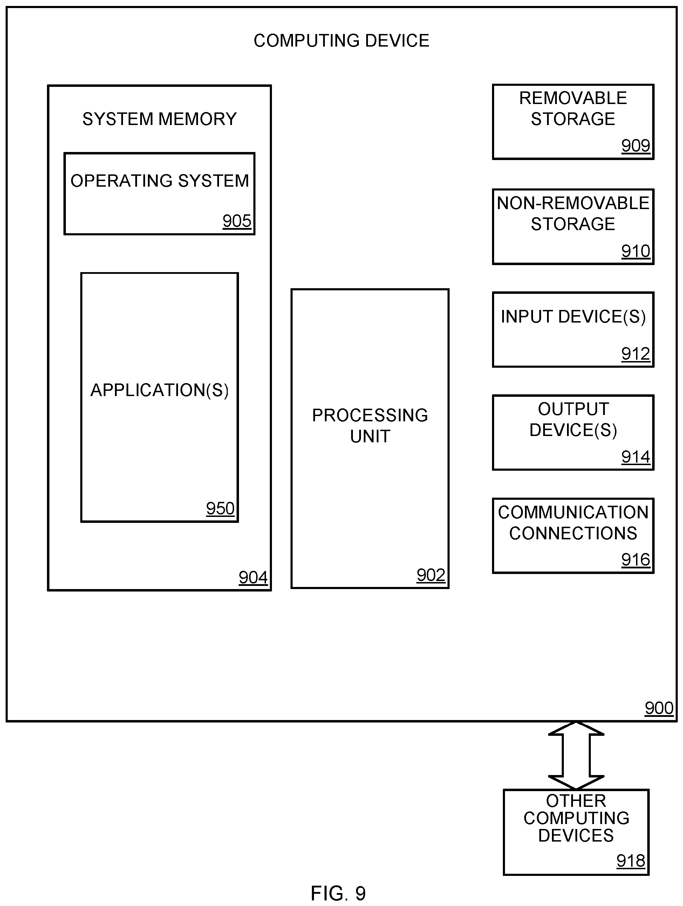

FIG. 9 illustrates various components of an exemplary computing-based device 900 which are implemented as any form of a computing and/or electronic device, and in which some or all the steps of the method of Fig. 8 are implemented in some examples. In some examples, the computing-based device 900 is a general-purpose computer that is activated or reconfigured by a computer program stored in the computer. In other examples the computing-based device is specially constructed for the intended purpose.

Computing-based device 900 comprises a processing unit 902 in which one or more processors which are microprocessors, controllers or any other suitable type of processors for processing computer executable instructions to control the operation of the device in order to control imaging, data processing and actuation. The processors may include at least one general-purpose processing device such as a central processing unit, microprocessor, complex instruction set computing (CISC) microprocessor, reduced instruction set computing (RISC) microprocessor, or other general-purpose processing device. In some examples, for example where a system on a chip architecture is used, the processors include one or more special-purpose processing device such as a fixed function block (also referred to as an accelerator) which implements a part of the method of Fig. 8 in hardware (rather than software or firmware). The special-purpose processing device may be configured to execute instructions for performing the operations and methods described herein. Platform software comprising an operating system 905 or any other suitable platform software is provided at the computing-based device to enable application software to be executed on the device.

The computer executable instructions are provided using any computer-readable media that is accessible by computing based device 900. Computer-readable media includes, for example, computer storage media such as memory 904 and communications media. Computer storage media, such as memory 904, includes volatile and non-volatile, removable 909 and non-removable 910 storage/media implemented in any method or technology for storage of information such as computer readable instructions, data structures, program modules or the like. Computer storage media includes, but is not limited to, random access memory (RAM), read only memory (ROM), erasable programmable read only memory (EPROM), electronic erasable programmable read only memory (EEPROM), flash memory or other memory technology, optical storage, or any other non-transmission medium that is used to store information for access by a computing device. In contrast, communication media embody computer readable instructions, data structures, program modules, or the like in a modulated data signal, such as a carrier wave, or other transport mechanism. As defined herein, computer storage media does not include communication media. Therefore, a computer storage medium should not be interpreted to be a propagating signal per se. Although the computer storage media (memory 904) is shown within the computing-based device 900 it will be appreciated that the storage is, in some examples, distributed or located remotely and accessed via a network or other communication link (e.g. using communication connections 916).

The computing-based device 900 also comprises an input/output controller arranged to output display information to a display device which may be separate from or integral to the computing-based device 900. The display information may provide a graphical user interface. The input/output controller is also arranged to receive and process input from one or more devices, such as a user input device 912 (e.g. a mouse, keyboard, camera, microphone or other sensor). In some examples the user input device 912 detects voice input, user gestures or other user actions and provides a natural user interface (NUI). This user input may be used, in relation to Fig. 8, to perform one or more of blocks 801 to 806. In an embodiment the display device also acts as the user input device if it is a touch sensitive display device. The input/output controller outputs data to devices other than the display device. In one example, the computing device is arranged to image an end face of an optical fiber cane or receive such an image from a connected device, e.g. via the input device 912 or via the communications connection 916; and determine in the image a plurality of locations at the cane end face image, each location of the plurality of locations corresponding to a hollow portion of the cane. Directions of one or more of the determined holes may also be determined. The computing device may use the determination to create an electronic file with the determination and instruction a further device to make a plurality of holes in a membrane disk, each of the holes corresponding to a location of the determined plurality of locations. The determined information may be stored in system memory 904, on removable storage 909, on non-removable storage 910, output to an output device 914 or transmitted over the communications connection 916. The further device may be a robotic device able to actuate the membrane or a tool that creates the holes in the membrane.

The term 'computer' or 'computing-based device' is used herein to refer to any device with processing capability such that it executes instructions. The methods described herein are performed, in some examples, by application(s) as software in machine readable form on a tangible storage medium e.g. in the form of a computer program comprising computer program code means adapted to perform all the operations of one or more of the methods described herein when the program is run on a computer and where the computer program may be embodied on a computer readable medium. The software is suitable for execution on a parallel processor or a serial processor such that the method operations may be carried out in any suitable order, or simultaneously.

Those skilled in the art will realize that storage devices utilized to store program instructions are optionally distributed across a network to other computing devices 918. For example, a remote computer is able to store an example of the process described as software. A local or terminal computer is able to access the remote computer and download a part or all of the software to run the program. Alternatively, the local computer may download pieces of the software as needed, or execute some software instructions at the local terminal and some at the remote computer (or computer network). Those skilled in the art will also realize that by utilizing conventional techniques known to those skilled in the art that all, or a portion of the software instructions may be carried out by a dedicated circuit, such as a digital signal processor (DSP), programmable logic array, or the like.

Alternatively or in addition to the other examples described herein, examples include any combination of the following:
Clause A. A pressure interface for providing pressure to hollow portions of an optical fiber cane, the pressure interface comprising: a pressure manifold having a plurality of channels therethrough, each of the plurality of channels being at least partially aligned with at least one hole of a membrane disk; and the membrane disk having a plurality of holes therethrough, the membrane disk having a flat surface abutting a flat surface of the pressure manifold.
Clause B. The pressure interface of clause A, wherein a hole of plurality of holes of the membrane disk is not perpendicular to the flat surface of the membrane disk.
Clause C. The pressure interface of clause A or clause B, wherein a channel of plurality of channels of the pressure manifold is not perpendicular to the flat surface of the pressure manifold.
Clause D. The pressure interface of any preceding clause, wherein a hole of the plurality of holes of the membrane disk has a diameter smaller than a diameter of a channel of the plurality of channels of the pressure manifold that the hole abuts.
Clause E. The pressure interface of any preceding clause, wherein a diameter of a channel of the plurality of channels of the pressure manifold increases in diameter as distance from the pressure manifold flat surface increases.
Clause F. The pressure interface of any preceding clause further comprising a connection manifold, the connection manifold having a plurality of connections, each connection of the plurality of connections being in fluid communication with a channel of the pressure manifold.
Clause G. A drawing apparatus comprising the pressure interface of any preceding clause and a section of optical fiber cane, the cane having a plurality of hollow structures extending axially along the cane, the hollow structures defining a plurality of hollow portions of the cane, wherein an end surface of the cane abuts the membrane disk; and the plurality of holes of the membrane disk are each aligned with one of the plurality of hollow structures of the cane.
Clause H. The drawing apparatus of clause G, wherein each of the plurality of holes of the membrane disk have a smaller cross-sectional area than the respective cane hollow structure that each hole is aligned with.
Clause I. The drawing apparatus of clause H, wherein the plurality of hollow structures comprises a plurality of nested capillaries.
Clause J. A method of manufacturing a pressure interface for an optical fiber cane, the cane having a plurality of hollow structures extending axially along the cane, the hollow structures defining a plurality of hollow portions of the cane, the method comprising: imaging an end face of the cane; determining in the image a plurality of locations at the cane end face, each location of the plurality of locations corresponding to a hollow portion of the cane; making a plurality of holes in a membrane disk, each of the holes corresponding to a location of the determined plurality of locations; and abutting the membrane disk with a pressure manifold, the pressure manifold having a plurality of channels therethrough, each of the plurality of channels being at least partially aligned with a hole of the plurality of holes of the membrane disk.
Clause K. The method of clause J, wherein the end face of the cane or a structure coupled thereto has a datum point, the method further comprising: imaging the datum point; and when abutting the membrane disk with the pressure manifold, aligning the membrane disk with the pressure manifold using the datum point.
Clause L. The method of clause J or clause K further comprising: prior to imaging the end face of the cane, rotationally aligning the cane to a predetermined alignment.
Clause M. The method of any of clauses J to L, further comprising: determining where on the membrane disk to locate a hole to engage with both a cane hollow portion and a pressure manifold channel.
Clause N. The method of clause 13, further comprising: determining an angle through the membrane disk at which to make the hole to engage with both the cane hollow portion and the pressure manifold channel.
Clause O. The method of clause N, wherein that making of the plurality of holes in a membrane disk is performed by an automated process.
Clause P. The method of clause N or clause O, wherein engagement with the pressure manifold channel comprises the hole being within a predetermined area corresponding to the pressure manifold channel.
Clause Q. The method of any of clauses J to P, further comprising: saving into a map file, the determined locations at the cane end face, wherein the plurality of holes made in the membrane disk are according to the map file.
Clause R. The method of any of clauses J to Q, further comprising: at least partially receiving the membrane disk withing a recess of the pressure manifold.
Clause S. The method of clause R, further comprising: receiving a section of the cane within the recess of the pressure manifold.
Clause T. The method of any of clauses J to S, further comprising: providing a connection manifold, the connection manifold having a plurality of connections, each connection of the plurality of connections being in fluid communication with a channel of the plurality of channels of the pressure manifold.
Clause U. The method of any of clauses J to T, wherein determining in the image the plurality of locations at the cane end face is performed by a computer program that provide a map of the plurality of locations.

Any range or device value given herein may be extended or altered without losing the effect sought, as will be apparent to the skilled person.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item refers to one or more of those items.

The operations of the methods described herein may be carried out in any suitable order, or simultaneously where appropriate. Additionally, individual blocks may be deleted from any of the methods without departing from the scope of the subject matter described herein. Aspects of any of the examples described above may be combined with aspects of any of the other examples described to form further examples without losing the effect sought.

The term 'comprising' is used herein to mean including the method blocks or elements identified, but that such blocks or elements do not comprise an exclusive list and a method or apparatus may contain additional blocks or elements.

Additionally, as used in this disclosure, phrases of the form "at least one of an A, a B, or a C," "at least one of A, B, and C," and the like, should be interpreted to select at least one from the group that comprises "A, B, and C." Unless explicitly stated otherwise in connection with a particular instance in this disclosure, this manner of phrasing does not mean "at least one of A, at least one of B, and at least one of C." As used in this disclosure, the example "at least one of an A, a B, or a C," would cover any of the following selections: {A}, {B}, {C}, {A, B}, {A, C}, {B, C}, and {A, B, C}.

It will be understood that the above description is given by way of example only and that various modifications may be made by those skilled in the art. The above specification, examples and data provide a complete description of the structure and use of exemplary embodiments. Although various embodiments have been described above with a certain degree of particularity, or with reference to one or more individual embodiments, those skilled in the art could make numerous alterations to the disclosed embodiments without departing from the scope of this specification.

## Claims

1. A pressure interface (600) for providing pressure to hollow portions (401, 404, 406, 408) of an optical fiber cane (400), the pressure interface comprising:
a pressure manifold (560) having a plurality of channels (561, 564) therethrough, each of the plurality of channels being at least partially aligned with at least one hole of a membrane disk (550); and
the membrane disk (550) having a plurality of holes therethrough, the membrane disk having a flat surface abutting a flat surface of the pressure manifold.

2. The pressure interface of claim 1, wherein a hole of plurality of holes of the membrane disk is not perpendicular to the flat surface of the membrane disk.

3. The pressure interface of claim 1 or claim 2, wherein a channel of plurality of channels of the pressure manifold is not perpendicular to the flat surface of the pressure manifold.

4. The pressure interface of any preceding claim, wherein a hole of the plurality of holes of the membrane disk has a diameter smaller than a diameter of a channel of the plurality of channels of the pressure manifold that the hole abuts.

5. The pressure interface of any preceding claim, wherein a diameter of a channel of the plurality of channels of the pressure manifold increases in diameter as distance from the pressure manifold flat surface increases.

6. The pressure interface of any preceding claim, further comprising a connection manifold (580), the connection manifold having a plurality of connections (581, 584), each connection of the plurality of connections being in fluid communication with a channel of the pressure manifold.

7. A drawing apparatus comprising the pressure interface (600) of any preceding claim and a section of optical fiber cane (400), the cane having a plurality of hollow structures extending axially along the cane, the hollow structures defining a plurality of hollow portions of the cane, wherein
an end surface of the cane abuts the membrane disk; and
the plurality of holes of the membrane disk are each aligned with one of the plurality of hollow structures of the cane.

8. A method (800) of manufacturing a pressure interface for an optical fiber cane, the cane having a plurality of hollow structures extending axially along the cane, the hollow structures defining a plurality of hollow portions of the cane, the method comprising:
imaging (801) an end face of the cane;
determining (802) in the image a plurality of locations at the cane end face, each location of the plurality of locations corresponding to a hollow portion of the cane;
making (805) a plurality of holes in a membrane disk, each of the holes corresponding to a location of the determined plurality of locations; and
abutting (807) the membrane disk with a pressure manifold, the pressure manifold having a plurality of channels therethrough, each of the plurality of channels being at least partially aligned with a hole of the plurality of holes of the membrane disk.

9. The method of claim 8, wherein the end face of the cane or a structure coupled thereto has a datum point, the method further comprising:
imaging the datum point; and
when abutting the membrane disk with the pressure manifold, aligning the membrane disk with the pressure manifold using the datum point.

10. The method of claim 8 or claim 9, further comprising: determining where on the membrane disk to locate a hole to engage with both a cane hollow portion and a pressure manifold channel.

11. The method of claim 10, further comprising: determining (803) an angle through the membrane disk at which to make the hole to engage with both the cane hollow portion and the pressure manifold channel.

12. The method of any of claims 8 to 11, further comprising: saving (804) into a map file, the determined locations at the cane end face, wherein the plurality of holes made in the membrane disk are according to the map file.

13. The method of any of claims 8 to 12, further comprising: at least partially receiving the membrane disk withing a recess of the pressure manifold, or receiving a section of the cane within the recess of the pressure manifold.

14. The method of any of claims 8 to 13, further comprising: providing a connection manifold, the connection manifold having a plurality of connections, each connection of the plurality of connections being in fluid communication with a channel of the plurality of channels of the pressure manifold.

15. The method of any of claims 8 to 14, wherein determining in the image the plurality of locations at the cane end face is performed by a computer program that provide a map of the plurality of locations.
